# EUROPÄISCHE PATENTSCHRIFT

(11) **EP 0 528 450 B1**
(45) Veröffentlichungstag und Bekanntmachung des Hinweises auf die Patenterteilung: **28.08.1996**
(21) Anmeldenummer: 92119515.2
(22) Anmeldetag: 13.11.1990
(51) Int. Cl.: E04B 1/16, E04B 5/23, E04G 23/02, F16B 35/04, F16B 25/00

(54) **Verbundkonstruktion aus einem Holzbalken bzw. -träger aufweisenden Tragwerk und einer Ortbetonplatte**
Composite structure having a support structure with wooden beams or supports and a concrete slab cast on the spot
Structure composite ayant une structure support avec poutres ou supports en bois et une dalle de béton coulée sur place

(30) Priorität: 16.11.1989 AT 2627/89; 13.09.1990 DE 4029134
(43) Veröffentlichungstag der Anmeldung: 24.02.1993
(62) Teilanmeldung aus: 90121704.2
(73) Patentinhaber: SFS Handels Holding AG, CH-9435 Heerbrugg (CH)
(72) Erfinder: Spirig, Rudolf, CH-9443 Widnau (CH)
(74) Vertreter: Ludescher, Hans

(56) Entgegenhaltungen:
- EP-A- 0 037 567
- DE-C- 673 556
- FR-A- 2 510 163

## Beschreibung

Die Erfindung betrifft eine Verbundkonstruktion aus einem Holzbalken bzw. -träger aufweisenden Tragwerk und einer Ortbetonplatte, wobei ein mit einem Gewinde versehener Abschnitt eines Verbundelementes an der Oberseite der Holzbalken bzw. -träger eingeschraubt und der Kopfbereich des Verbundelementes als Armierungsteil zum Eingriff in die Ortbetonplatte ausgebildet ist.

Es ist schon vorgeschlagen worden, zur Verstärkung von Holzdecken eine Leichtbetonschicht aufzutragen, wobei als Verbundelement zur Aufnahme der entstehenden Schubkräfte zwischen der Holzdecke und der Betonschicht Holzschrauben eingesetzt wurden, welche zu einem Teil in die Holzbalken eingeschraubt worden sind, so daß der frei herausragende Teil solcher Schrauben mit dem Schraubenkopf in die Leichtbetonschicht eingreifen konnte. Dadurch wurde praktisch eine Holz-Beton-Verbunddecke geschaffen, was zu einer verbesserten Trittschall- und einer guten Luftschall-und Wärmeisolation führt. Die Zwischendecken in Gebäuden müssen also nicht mehr herausgerissen werden, sondern die vorhandenen Balken und Holzböden können in die Konstruktion miteinbezogen werden. Es können dadurch vor dem Aufbringen der Betonschicht die elektrischen und sanitären Installationen auf die Böden verlegt werden.

In einer solchen Verbunddecke sollen die Zugkräfte von den Holztragbalken übernommen werden, wohingegen die Betonschicht die Druckkräfte übernehmen soll. Die zwischen den beiden Verbundteilen entstehenden Schubkräfte werden durch die eingesetzten Holzschrauben aufgenommen. Belastungsversuche bei solchen Verbundkonstruktionen haben nicht ganz das gehalten, was man sich versprochen hat. Der Verbund ist offensichtlich zu gering, was bedeutet, daß die Durchbiegung einer solchen Verbunddecke doch größer ist als angenommen. Gerade die Durchbiegung ist aber bei der Anwendung einer Verbunddecke ein wesentlicher Faktor.

Es ist bereits eine Verbunddecke bekannt geworden (DE-C-673 556), bei welcher Z- oder l-Eisen zur Herstellung eines Schubverbundes zwischen dem Holzbalken und einer darüber liegenden Ortbetonplatte eingesetzt werden. Im Holzbalken werden schräg zur Oberfläche des Holzbalkens Querschlitze vorbereitet, in welche die freien Schenkel der Z- oder l-Eisen eingesetzt werden können. Dadurch wird der Holzbalken über seine ganze Breite bei jedem einzusetzenden Eisen durchtrennt. Es ergibt sich keine andere Möglichkeit, um eine Verbundwirkung zu erzielen, als solche schrägen Schlitze vorzusehen. Bei einer solchen Konstruktion ist die sichere Verbindung quer zur Längserstreckung des Balkens, also in vertikaler Richtung gesehen, nicht optimal gegeben, da die abstehenden Stege der Eisenteile lediglich in die herausgeschnittenen Schlitze eingehängt werden und keinerlei kraftschlüssige Verbindung hergestellt wird.

Die vorliegende Erfindung hat sich nun zur Aufgabe gestellt, eine Verbundkonstruktion der eingangs genannten Art bezüglich der Durchbiegung wesentlich zu verbessern. Zur Lösung dieser Aufgabe wird vorgeschlagen, daß die Verbundelemente in einem zu der von der Oberseite des Holzbalkens bzw. -trägers gebildeten Begrenzungsfläche spitzen Winkel und jeweils paarweise nebeneinander in die Holzbalken bzw. -träger eingeschraubt sind, wobei die beiden Verbundelemente des Paares in entgegengesetzte Richtungen geneigt sind.

Es hat sich gezeigt, daß durch diese "schräg" und "paarweise" eingedrehten Verbundelemente zwischen den Holzbalken und der Ortbetonplatte ein wesentlich besserer Verbund erzielt wird. Es wird also eine Verbindung nach Art eines Fachwerkträgers geschaffen, so daß der eigentliche Verbund wesentlich verbessert wird. Trotz gleicher Abmaße der Holzbalken und gleicher Dicke der Ortbetonplatte kann die Durchbiegung mit einer solchen Anordnung der Verbundelemente wesentlich verringert werden. Es hat sich bereits bei ersten Versuchen eine Durchbiegung der Verbundkonstruktion feststellen lassen, die um mehr als 30% kleiner ist als bei Anordnung der Verbundelemente rechtwinklig zur Oberseite des Holzbalkens.

Je nach Länge eines Balkens und je nach Tragkraft desselben können solche Paare von Verbundelementen in gleichen oder in sich ändernden Abständen voneinander angeordnet werden, wobei es auch zweckmäßig sein kann, wenn diese Paare gegen die Enden der Holzbalken zu in geringerem Abstand aufeinander folgen als dies im Mittelbereich des Holzbalkens der Fall ist.

Vorzugsweise Kreuzen einander die Verbundelemente eines Paares.

Eine vorteilhafte Ausführungsvariante liegt darin, daß die Verbundelemente in Längsrichtung des Holzbalkens bzw. -trägers gesehen jeweils paarweise mit Abstand aufeinander folgend angeordnet sind, wobei die Verbundelemente jedes Paares einen rechten oder spitzen Winkel miteinander einschließen, so daß die Kopfbereiche der beiden Verbundelemente jedes Paares mit geringem Abstand voneinander gegeneinander geneigt sind. Auf diese Art wird eine Form von Fachwerkträger geschaffen, welcher einen optimalen gegenseitigen Verbund ermöglicht und somit die Durchbiegung einer solchen Verbund-konstruktion noch weiter herabsetzt. Es wird sich also eine Verringerung der Durchbiegung einer erfindungsgemäßen Verbundkonstruktion um mehr als 50% erzielen lassen.

Je nach Belastungsfall können die Verbundelemente in einer oder mehreren Reihen bezüglich eines Holzbalkens angebracht werden, wobei dann die Achsen der Verbundelemente in einer oder in zwei bzw. mehreren parallel zueinander liegenden, in Längsrichtung des Holzbalkens bzw. -trägers gedachten, auf dessen Oberseite vertikale(n), Ebene(n) liegen.

Um zusätzlich eine bessere Verankerung der beiden Verbundelemente in Richtung quer zu den Holzbalken zu erreichen, besteht die Möglichkeit, daß die Verbundelemente in einem spitzen Winkel zur Oberseite und quer zur Längsrichtung des Holzbalkens bzw. -trägers geneigt eingeschraubt sind. Eine solche Anordnung der Verbundelemente kann entweder zusätzlich zu den in der anderen Richtung, also in Längsrichtung des Holzbalkens geneigten Verbundelementen erfolgen, oder aber es wäre auch denkbar, sämtliche Verbundelemente eben in Richtung quer zur Längsrichtung des Holzbalkens geneigt einzuschrauben, wobei auch in einem solchen Falle jeweils paarweise zwei Verbundelemente nebeneinander angeordnet sein könnten.

In diesem Zusammenhang ist es auch möglich, daß die Verbundelemente sowohl in Längsrichtung als auch quer zum Holzbalken bzw. -träger geneigt eingeschraubt sind, also mit ihrer Längsachse in einer spitzwinklig zur Längsvertikalebene auf die Oberseite eines Holzbalkens bzw.-trägers gedachten Ebene liegen.

Weitere erfindungsgemäße Merkmale und besondere Vorteile werden in der nachstehenden Beschreibung anhand der Zeichnungen noch näher erläutert. Es zeigen:
- Fig. 1: eine Ansicht eines erfindungsgemäßen Verbundelementes;
- Fig. 2: einen Schnitt durch eine Verbundkonstruktion mit eingesetztem Verbundelement;
- Fig. 3: einen Schnitt durch eine Gebäudedecke, wobei lediglich die gesamte Holzkonstruktion mit Unterdecke dargestellt ist;
- Fig. 4: einen Längsschnitt durch eine Verbunddecke, aus der eine spezielle Anordnung der Verbundelemente ersichtlich ist;
- Fig. 5: einen gleichen Längsschnitt mit anderer Anordnung der Verbundelemente.

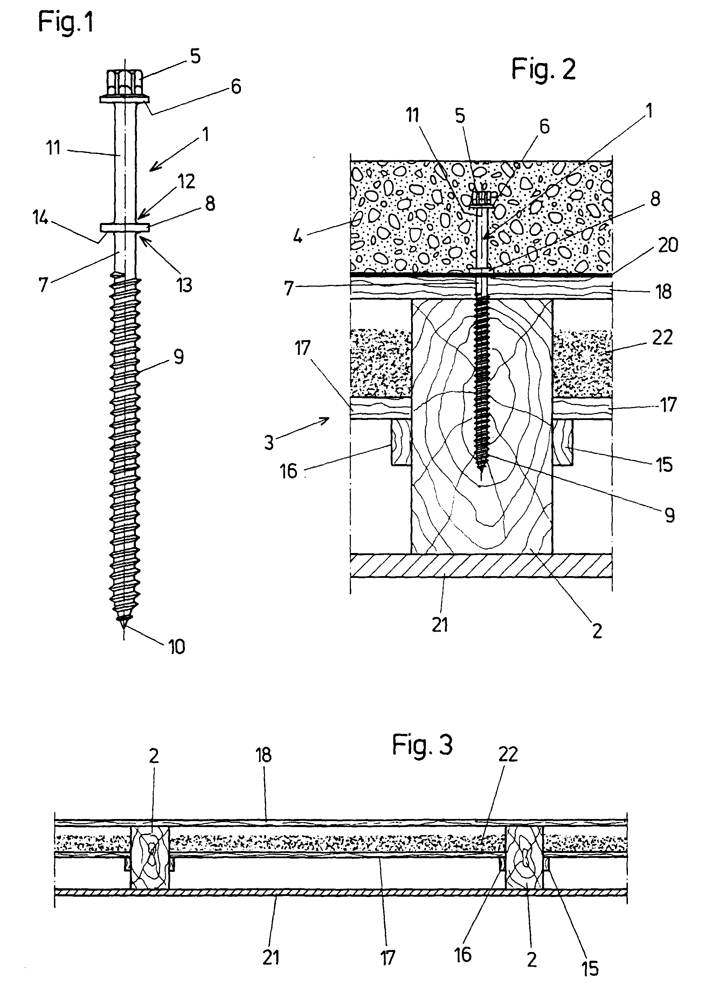

Das in den Fig. 1 und 2 dargestellte Verbundelement 1 dient zum Einsatz als Verbindung zwischen einem Holzbalken 2 aufweisenden Tragwerk 3 und einer Ortbetonplatte 4. Das Verbundelement 1 besteht im wesentlichen aus einem Kopf 5, einem Bund 6, einem Schaft 7, einem Flansch 8 und einem Gewinde 9 mit einer Eindrehspitze 10. Der Kopf 5 ist zum Eingriff eines Drehwerkzeuges ausgebildet, wobei auf der Zeichnung ein Außenantrieb dargestellt ist. Es wäre aber durchaus denkbar, einen Innenantrieb am Kopf 5 vorzusehen. An den Kopf 5 schließt schaftseitig der den Kopf 5 radial überragende, umlaufende Bund 6 an. Der Flansch 8 ist mit Abstand vom Kopf 5 und somit auch vom Bund 6 am Schaft 7 angeordnet. Der Bund 6 und der Flansch 8 weisen zweckmäßig zumindest annähernd die gleichen Außenabmessungen auf. Das Gewinde 9 ist an dem bezüglich des Flansches 8 dem Kopf 5 abgewandten Abschnitt des Schaftes 7 vorgesehen und dient zum Eindrehen des Verbundelementes in den Holzbalken 2.

Der Durchmesser des Bundes 6 und des Flansches 8 entspricht zumindest annähernd dem doppelten Schaftdurchmesser. Der Durchmesser des Schaftes 7 im Bereich zwischen Bund 6 und Flansch 8 entspricht zumindest annähernd dem Außendurchmesser des Gewindes 9 am Schaft 7. Der Schaftabschnitt 11 im Bereich zwischen Bund 6 und Flansch 8 ist zweckmäßig gewindefrei ausgeführt. Es wäre durchaus denkbar, diesen Schaftbereich 11 gerillt auszuführen, wobei dies jedoch in bezug auf die ordnungsgemäße, gegenseitige Befestigung der Verbundteile nicht notwendig ist. Außerdem würde dadurch bei Knickbelastungen eine Querschnittsschwächung hervorgerufen.

Das Gewinde 9 kann z.B. als Holzschraubengewinde ausgeführt werden. Bei einem Holzschrauben-, Spanplatten- oder Blechgewinde kann das Verhältnis zwischen Kerndurchmesser und Außendurchmesser relativ groß gewählt werden, so daß die Ausreißwerte sehr hoch liegen. Gerade bei entsprechendem Durchmesser des Verbundelementes ist es aber unter Umständen zweckmäßig, am freien Ende des Gewindeschaftes eine Bohrspitze oder eine angefräste Spitze vorzusehen. Die Spaltgefahr des Holzbalkens wird dadurch ausgeschaltet. Vorteilhaft ist das Gewinde 9 nach Art eines Blechschraubengewindes ausgeführt, wobei dann das Verhältnis von Kerndurchmesser zu Außendurchmesser annähernd 1 : 1,2 bis 1 : 1,6 beträgt. Eine solche Ausführungsform des Gewindes für das erfindungsgemäße Verbundelement sieht einen Kerndurchmesser von 5,15 mm und einen Gewindeaußendurchmesser von 6,5 mm vor. Die Gewindesteigung beträgt 2,54 mm. Mit einer solchen Ausführung des Gewindes am Verbundelement 1 können trotz relativ kleinem Verhältnis zwischen Kern- und Außendurchmesser ausgezeichnete Ausreißwerte erzielt werden, und außerdem ist die Gewähr gegeben, daß beim Eindrehen des Verbundelementes weder ein Vorbohren notwendig ist noch eine Spaltgefahr für den Holzbalken 2 besteht. Je nach Einsatzzweck der Verbundelemente könnte der Schaft auch mit einem größeren Durchmesser ausgebildet werden, wobei dann der Durchmesser des Bundes und des Schaftes nicht zwangsweise ebenfalls doppelt so groß sein müßte.

Für eine ausreichende Verankerung des Verbundelementes 1 sowohl im Holzbalken 2 als auch in der Ortbetonplatte 4 beträgt der axiale Abstand zwischen Bund 6 und Flansch 8 annähernd ein Drittel der gesamten Länge des Verbundelementes 1.

An den Übergangsbereichen 12 und 13 zwischen Schaft 7 bzw. Schaftabschnitt 11 und dem Flansch 8 ist ein im Querschnitt bogenförmiger Verlauf vorgesehen. Es wäre auch denkbar, am Übergangsbereich 12 bzw. 13 zwischen Schaft 7 und Flansch 8 einen sich zum Flansch 8 hin konisch erweiternden Ansatz vorzusehen.

Der Flansch 8 könnte eine besondere Ausbildung aufweisen, und zwar könnte dieser an seiner gewindeseitigen Begrenzungsfläche 14 an dessen Außenrandbereich einen koaxial zum Schaft ausgerichteten, vorstehenden Ringabschnitt aufweisen. Es wäre dadurch gerade am Außenrandbereich des Flansches 8 ein besonderer Anpreßdruck gegen die Oberseite der Holzkonstruktion möglich.

Das Gesamt-Verbundelement kann einer Oberflächenbehandlung unterzogen werden. So wäre eine verzinkte Ausführung möglich oder aber nur eine geschwärzte Ausgestaltung. Gerade im Hinblick auf das Eindrehen des Verbundelementes in Holz ist es zweckmäßig, wenn zumindest der Gewindebereich des Verbundelementes 1 mit einer Wachsbeschichtung oder einer anderen, die Reibung beim Eindrehen mindernden Beschichtung versehen ist.

Wie bei anderen Befestigern wäre es auch beim erfindungsgemäßen Verbundelement möglich, dieses aus rostfreiem Material zu fertigen. Da das Verbundelement jedoch bei dieser speziellen Anwendungsart weder der Witterung noch der Atmosphäre ausgesetzt ist, kann hier auf eine solche Ausführung verzichtet werden.

Die erfindungsgemäßen Verbundelemente 1 werden zweckmäßig mit einem Schrauber oder einem speziellen Setzgerät in die Holzbalken 2 eingedreht, wobei der Bund 6 und der Flansch 8 im Zusammenwirken mit einer Schraubernuß für eine ordnungsgemäße Führung in einem Schrauberkanal herangezogen werden können. Es ist dann zweckmäßig, wenn der Durchmesser von Bund 6 und Flansch 8 zumindest annähernd dem Außendurchmesser einer am Kopf 5 ansetzbaren Schraubernuß entspricht.

Aus Fig. 2 ist der Aufbau einer Altbaudecke ersichtlich, wobei in diesem Zusammenhang auch auf die Fig. 3 verwiesen wird. In entsprechendem Abstand voneinander sind parallel zueinander ausgerichtet Holzbalken 2 von Wand zu Wand verlaufend angeordnet. An den Seitenwandungen der Holzbalken 2 sind Latten 15 und 16 befestigt, auf welchen Schräg- oder Blindböden 17 aufgesetzt sind. Auf die Schräg- oder Blindböden 17 wurden früher zwischen den einzelnen Holzbalken 2 Sand- oder Schlackefüllungen eingebracht, und auf den Holzbalken 2 lagen die Bodenbretter 18 auf und wurden mit diesen z.B. mittels Nägeln oder Schrauben befestigt.

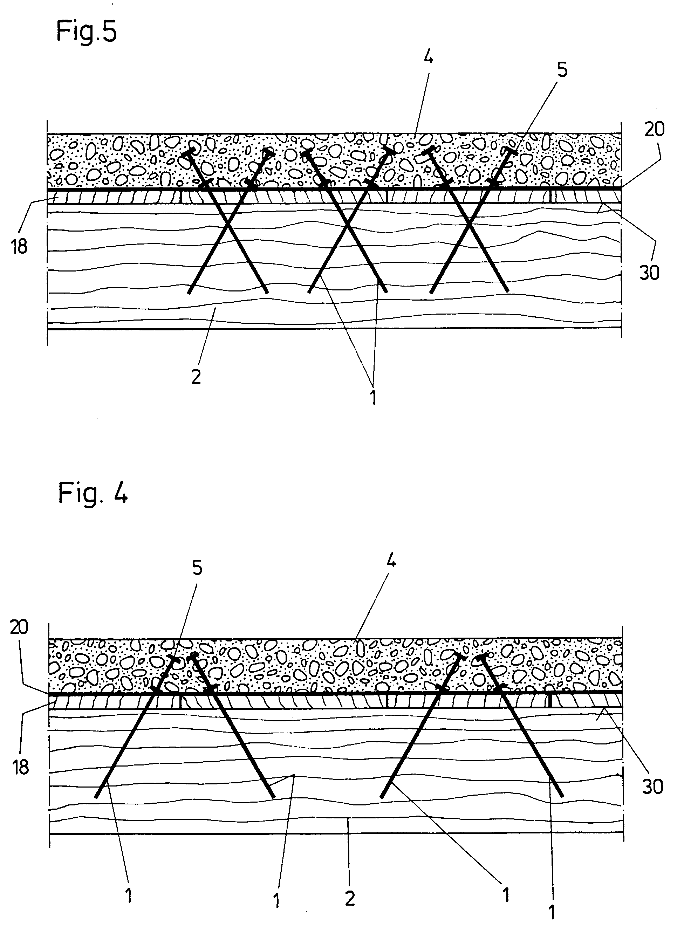

Mit Sondieröffnungen können dann Lage, Abmessungen und Zustand der Holzbalken 2 festgestellt werden. Insbesondere der Zustand der Auflager an den Außenwänden wird sorgfältig überprüft. Nun wird die Bretterlage 18 mit einer Plastikfolie 20 abgedeckt, um dadurch eine Abdichtung gegen die gesamte Holzkonstruktion zu erreichen. Durch das Aufbringen von Ortbeton gibt es eine entsprechende Menge Feuchtigkeit bzw. Flüssigkeit, welche ansonsten in die Holzkonstruktion eindringen würde. Nun werden ohne Vorbohren die Verbundelemente 1 durch die Plastikfolie 20 und die Bretterlage 18 hindurch in den Holzbalken 2 eingedreht. Das spezielle Gewinde am Verbundelement sorgt für hohe Zug- und Schubwiderstände der Verbundelemente und damit für eine hohe Traglast des ganzen Systems. Je nach Spannweite der Holzbalken 2, nach Abstand der aufeinander folgenden Holzbalken 2 und nach dem baulichen Zustand derselben müssen mehr oder weniger Verbundelemente gesetzt werden, wobei dies einer exakten Berechnung bedarf. Die Anordnung der Verbundelemente wird noch anhand der Fig. 4 und 5 näher erläutert.

Beim Eindrehen der Verbundelemente 1 wird nicht nur die Bretterlage 18 gegen die Oberseite der Holzbalken 2 angepreßt, sondern es wird zusätzlich die auf die Bretterlage 18 aufgelegte Plastikfolie 20 durch den Flansch 8 fest an die Oberseite der Bretterlage 18 gedrückt, so daß trotz der beim Eindrehen des Verbundelementes gebildeten Öffnung eine ausreichende Abdichtung gewährleistet ist. Nun kann die Ortbetonplatte 4 gefertigt werden. Zweckmäßig wird Normalbeton mit einem Größtkorn von 8 mm eingesetzt. Leichtbeton hat in der Regel einen zu geringen E-Modul. Die Stärke der Ortbetonplatte 4 beträgt normalerweise 8 cm. 6 cm sollte an sich nicht unterschritten werden. Für sehr hohe Anforderungen an den Schallschutz und die Tragfähigkeit sind Plattenstärken von 10 - 12 cm möglich. Je nach Aufbau der Decke und des geforderten Schallschutzes kann noch ein schwimmender Estrich eingebaut werden. Allenfalls genügt auch ein auf die Ortbetonplatte 4 aufgelegter Teppich mit dem erforderlichen Verbesserungsmaß.

Besonders vorteilhaft wirkt sich aus, daß eine an der Unterseite der Holzbalken 2 befestigte Decke 21, z.B. eine Gipsdecke, für diesen Verstärkungsvorgang der gesamten Deckenkonstruktion nicht entfernt werden muß. Die in die Deckenkonstruktion eingefüllte Sand- oder Schlackefüllung 22 kann in der Deckenkonstruktion verbleiben.

In Fig. 4 ist die erfindungsgemäße Anordnung der Verbundelemente 1 in der Verbundkonstruktion dargestellt, und zwar anhand eines Längsschnittes durch eine Verbundkonstruktion entlang eines Holzbalkens 2. Es ist daraus ersichtlich, daß die Verbundelemente 1 in einem zu der von der Oberseite 30 des Holzbalkens 2 gebildeten Begrenzungsfläche spitzen Winkel in die Holzbalken eingeschraubt sind. Die in Längsrichtung des Holzbalkens 2 aufeinander folgenden Verbundelemente 1 sind nach entgegengesetzten Richtungen geneigt in die Holzbalken 2 eingeschraubt, so daß eine Art Fachwerkträger geschaffen wird.

Bei der Ausbildung nach Fig. 5 sind die Verbundelemente 1 jeweils paarweise nebeneinander in den Holzbalken 2 eingeschraubt, wobei die beiden Verbundelemente 1 des Paares einander kreuzend in entgegengesetzte Richtungen geneigt sind. Durch diese besondere Konstruktion ist eine optimal wirkende Verbundkonstruktion zwischen den Holzbalken 2 und der Ortbetonplatte 4 geschaffen, so daß auch große Zug- und Druckkräfte aufgenommen werden können. Die Durchbiegung wird dadurch auf ein Minimum begrenzt.

Gerade bei der Ausführung nach Fig. 4 ist ersichtlich, daß die Verbundelemente 1 auch bei einer solchen Anordnung paarweise mit Abstand aufeinander folgend eingeschraubt werden können, wobei die Verbundelemente 1 jedes Paares einen rechten oder spitzen Winkel miteinander einschließen. Die Kopfbereiche der beiden Verbundelemente sind dadurch gegeneinander geneigt und haben nurmehr einen geringen Abstand voneinander.

Diese "schräge" Anordnung der Verbundelemente 1 kann auch in mehrfacher Anordnung erfolgen, so daß solche Verbundelemente in einer oder mehreren Ebenen nebeneinander, also seitlich zueinander versetzt, in die Oberseite 30 des Holzbalkens 2 eingeschraubt sind.

Anhand der Fig. 4 und 5 wurde aufgezeigt, daß die Verbundelemente 1 in ihrer Neigung im wesentlichen so ausgerichtet sind, daß sie mit ihrer Mittelachse in einer Längsvertikalebene durch den Holzbalken 2 liegen. Es wäre aber auch denkbar, daß die Verbundelemente 1 in einem spitzen Winkel zur Oberseite 30 und quer zur Längsrichtung des Holzbalkens 2 geneigt eingeschraubt sind. Auch hier wäre dann eine paarweise Anordnung gegeben.

Eine weitere Variante sieht vor, daß die Verbundelemente 1 zur Oberseite 30 des Holzbalkens 2 einen spitzen Winkel einschließen, wobei jedoch die Achse eines solchen Verbundelementes 1 in einer spitzwinklig zur Längsvertikalebene durch den Holzbalken 2 gedachten Ebene liegt.

Obwohl die spezielle Konstruktion des Verbundelementes gerade bei einer solchen Anordnung, wie sie anhand der Fig. 1 bis 3 erläutert worden ist, besonders vorteilhaft ist, ist bei einer solchen schrägen Anordnung der Verbundelemente auch der Einsatz von Verbundelementen denkbar, welche als übliche Holzschrauben mit den entsprechenden Festigkeitswerten ausgebildet sind. Es könnte daher gerade bei einer solchen schrägen Anordnung unter Umständen auf den am Schaft des Verbundelementes 1 vorgesehenen, zusätzlichen Flansch verzichtet werden.

In der vorstehenden Beschreibung wurde stets von einem Holzbalken 2 gesprochen. Es können natürlich auch, insbesondere bei Neubauten, Holzträger der verschiedensten Ausführungsformen eingesetzt werden. So wäre es denkbar, eine entsprechende Verbundkonstruktion mit Leimbindern herzustellen. Es ist also auch möglich, das erfindungsgemäße Verbundelement bei Deckenkonstruktionen im Hallenbau einzusetzen, wo relativ große Spannweiten durch Leimbinder überbrückt werden.

Die erfindungsgemäße Verbundkonstruktion ist nicht nur bei der Altbausanierung einsetzbar, sondern auch bei Neubauten jeder Art. In der vorstehenden Beschreibung wurde anhand von Beispielen die Erläuterung durchgeführt, welche sich auf die Deckenkonstruktionen, also auf Geschoßdecken, bezieht. Eine erfindungsgemäße Verbundkonstruktion ist auch im Wandbereich einsetzbar, wo also mit einem aus Holz bestehenden Wandkonstruktionsteil eine Ortbetonplatte aus Normal- oder Leichtbeton in einem Verbund verankert werden soll.

Ein weiteres Einsatzgebiet der erfindungsgemäßen Verbundkonstruktion liegt z.B. auch beim Brückenbau, und zwar insbesondere dort, wo alte Holzbrücken saniert werden sollen. Es könnte hier die Tragfähigkeit alter Holzbrücken verbessert werden, und es würden daher Entscheidungen zur Erhaltung alter Holzbrücken leichter fallen, wenn diese in einfacher und sicherer Weise durch entsprechende Verstärkung mittels aufgebrachter Ortbetonschichten saniert werden könnten.

Bei einer Verbundkonstruktion mit dem erfindungsgemäßen Verbundelement ergeben sich neben Einsparungen bei Abbrucharbeiten auch Einsparungen an Schalung und Armierung, welche beim Ersatz einer Holzbalkendecke durch eine komplette Betondecke erforderlich wären. Eine Holz-Beton-Verbundkonstruktion ist wesentlich steifer und tragfähiger als die ursprüngliche Holzbalkendecke. Sie hat auch im Vergleich mit dieser einen wesentlich verbesserten Feuerwiderstand. Das kritische Element in einer Holz-Beton-Verbundkonstruktion war bisher die Anordnung der Verbundelemente zwischen Holz und Beton. Durch den Einsatz des in besonderer Weise ausgeführten, erfindungsgemäßen Verbundelementes können die Vorteile einer Holz-Beton-Verbundkonstruktion bezüglich hoher Tragfähigkeit, geringer Durchbiegung und geringen Spannungen im Holz und im Beton voll ausgenützt werden.

## Patentansprüche

1. Verbundkonstruktion aus einem Holzbalken (2) bzw. -träger aufweisenden Tragwerk und einer Ortbetonplatte (4), wobei ein mit einem Gewinde (9) versehener Abschnitt eines Verbundelementes (1) an der Oberseite der Holzbalken (2) bzw. -träger eingeschraubt und der Kopfbereich des Verbundelementes (1) als Armierungsteil zum Eingriff in die Ortbetonplatte (4) ausgebildet ist, wobei die Verbundelemente (1) in einem zu der von der Oberseite (30) des Holzbalkens (2) bzw. -trägers gebildeten Begrenzungsfläche spitzen Winkel und jeweils paarweise nebeneinander in die Holzbalken(2) bzw. -träger eingeschraubt sind, und wobei die beiden Verbundelemente (1) des Paares in entgegengesetzte Richtungen geneigt sind.

2. Verbundkonstruktion nach Anspruch 1, dadurch gekennzeichnet, daß die Verbundelemente (1) des Paares einander Kreuzen.

3. Verbundkonstruktion nach Anspruch 1, dadurch gekennzeichnet, daß die Verbundelemente (1) in Längsrichtung des Holzbalkens (2) bzw. -trägers gesehen jeweils paarweise mit Abstand aufeinander folgend angeordnet sind, wobei die Verbundelemente (1) jedes Paares einen rechten oder spitzen Winkel miteinander einschließen, so daß die Kopfbereiche der beiden Verbundelemente (1) jedes Paares mit geringem Abstand voneinander gegeneinander geneigt sind.

4. Verbundkonstruktion nach Anspruch 1, dadurch gekennzeichnet, daß die Achsen der Verbundelemente (1) in einer oder in zwei bzw. mehreren parallel zueinander liegenden, in Längsrichtung des Holzbalkens (2) bzw. -trägers gedachten auf dessen Oberseite vertikale(n) Ebene(n) liegen.

5. Verbundkonstruktion nach Anspruch 1 und/oder nach den Ansprüchen 2, 3 und 4, dadurch gekennzeichnet, daß die Verbundelemente (1) in einem spitzen Winkel zur Oberseite (30) und quer zur Längsrichtung des Holzbalkens (2) bzw. -trägers geneigt eingeschraubt sind.

6. Verbundkonstruktion nach Anspruch 1 und einem der Ansprüche 2 bis 5, dadurch gekennzeichnet, daß die Verbundelemente (1) sowohl in Längsrichtung als auch quer zum Holzbalken (2) bzw. -träger geneigt eingeschraubt sind, also mit ihrer Längsachse in einer spitzwinklig zur Längsvertikalebene auf die Oberseite eines Holzbalkens (2) bzw. -trägers gedachten Ebene liegen.

## Claims

1. A composite structure comprising a framework having timber beams (2) or joists and a cast-in-situ slab (4), wherein a portion of a connecting element (1) provided with a screw-thread (9) is screwed on to the upper surface of the timber beams (2) or joists and the head region of the connecting element (1) is designed as a reinforcing part for engagement in the cast-in-situ slab (4), wherein the connecting elements (1) are screwed in at an acute angle to the boundary surface formed by the upper surface (30) of the timber beam (2) or joist and in each case in pairs adjacent one another into the timber beams (2) or joists, and wherein the two connecting elements (1) of the pair are inclined in opposite directions.

2. A composite structure according to Claim 1, characterised in that the connecting elements (1) of the pair cross one another.

3. A composite structure according to Claim 1, characterised in that, viewed in the longitudinal direction of the timber beam (2) or joist, the connecting elements (1) are each arranged in pairs spaced apart and following one another, wherein the connecting elements (1) of each pair form a right angle or an acute angle with one another so that the head regions of the two connecting elements (1) of each pair are inclined towards one another and at a small distance apart.

4. A composite structure according to Claim 1, characterised in that the axes of the connecting elements (1) lie on one or on two or more imaginary vertical plane(s) lying parallel to one another, in the longitudinal direction of the timber beam (2) or joist, on the upper surface thereof.

5. A composite structure according to Claim 1 and/or according to Claims 2, 3 and 4, characterised in that the connecting elements (1) are screwed in inclined at an acute angle to the upper surface (30) and transversely to the longitudinal direction of the timber beam (2) or joist.

6. A composite structure according to Claim 1 and any one of Claims 2 to 5, characterised in that the connecting elements (1) are screwed in inclined both in longitudinal direction and transversely to the timber beam (2) or joist, i.e. with their longitudinal axis on an imaginary plane at an acute angle to the longitudinal vertical plane on the upper surface of a timber beam (2) or joist.

## Revendications

1. Construction composée d'une ossature formée d'un support ou d'une poutre en bois (2) et d'une plaque en béton coulé sur place (4), un segment d'un élément de liaison (1) muni d'un filetage (9) étant vissé dans la face supérieure de la poutre ou du support en bois (2) et la zone de tête de l'élément de liaison (1) constitue une pièce d'armature en prise dans la plaque en béton coulé sur place (4), dans laquelle les éléments de liaison (1) sont vissés suivant un angle aigu par rapport à la face supérieure (30) de la poutre ou du support en bois (2) constituant la surface limite, et chaque fois par paires, l'un à côté de l'autre, dans le support ou la poutre en bois (2) et les deux éléments de liaison (2) formant une paire sont inclinés dans des directions opposées.

2. Construction composée selon la revendication 1,
caractérisée en ce que
les éléments de liaison (1) d'une paire se croisent.

3. Construction composée selon la revendication 1,
caractérisée en ce que
les éléments de liaison (1) se suivent à distance dans la direction longitudinale du support ou de la poutre en bois (2), chaque fois par paires, et les éléments de liaison (1) de chaque paire font entre eux un angle droit ou aigu pour que les zones de tête des deux éléments de liaison (1) de chaque paire soient inclinées l'une de l'autre à une faible distance.

4. Construction composée selon la revendication 1,
caractérisée en ce que
les axes des éléments de liaison (1) sont situés dans un ou deux ou plusieurs plans verticaux sur la surface supérieure, parallèle, dans la direction longitudinale du support ou de la poutre en bois (2).

5. Construction composée selon la revendication 1 et/ou l'une des revendications 2, 3 et 4,
caractérisée en ce que
les éléments de liaison (1) sont vissés suivant un angle aigu par rapport à la face supérieure (30) et transversalement à la direction longitudinale du support ou de la poutre en bois (2).

6. Construction composée selon la revendication 1 et l'une des revendications 2 à 5,
caractérisée en ce que
les éléments composés (2) sont vissés dans les directions inclinées à la fois dans la direction longitudinale et transversalement au support ou à la poutre en bois (2) et ainsi leur axe longitudinal se situe dans un plan faisant un angle aigu par rapport au plan vertical longitudinal, à la face supérieure du support ou de la poutre en bois (2).
